# EUROPEAN PATENT APPLICATION

(11) **EP 4 647 866 A1**
(43) Date of publication of application: **12.11.2025**
(21) Application number: 23914505.5
(22) Date of filing: 19.12.2023
(51) Int. Cl.: G05D 1/648, A47L 11/40

(54) **CLEANING DEVICE CONTROL METHOD AND APPARATUS, ELECTRONIC DEVICE, AND READABLE STORAGE MEDIUM**

(30) Priority: 03.01.2023 CN 202310002808
(71) Applicant: Beijing Roborock Innovation Technology Co., Ltd., Beijing 102206 (CN)
(72) Inventor: LI, Yuxuan, Beijing 102206 (CN); NIU, Yansheng, Beijing 102206 (CN); CONG, Yiming, Beijing 102206 (CN)
(74) Representative: Haseltine Lake Kempner LLP
(86) International application number: PCT/CN2023/139885
(87) International publication number: WO 2024/146372

(57) **Abstract**

A cleaning device control method and apparatus, an electronic device and a readable storage medium, relating to the field of intelligent household appliances. The cleaning device control method comprises: step 101, determining a low-frequency passing area in a room to be cleaned; step 102, acquiring cleaning task information of the cleaning device; step 103, on the basis of the cleaning task information, planning in the low-frequency passing area a passing path for the cleaning device, and planning outside the low-frequency passing area a cleaning path for the cleaning device; and step 104, controlling the cleaning device to move along the passing path and move along the cleaning path.

## Description

### CROSS-REFERENCE TO RELATED APPLICATION

The present disclosure claims priority of the Chinese patent application entitled "Cleaning Device Control Method and Apparatus, Electronic Device and Readable Storage Medium" filed to the Patent Office of China on January 3, 2023, with application No. 202310002808.2, the disclosure of which is incorporated herein by reference in its entirety.

### TECHNICAL FIELD

The present disclosure relates to a field of intelligent household appliances, and more particularly, to a cleaning device control method and apparatus, an electronic device and a readable storage medium.

### BACKGROUND ART

In relevant technologies, a movement region of a cleaning device is divided into a routine cleaning region and a cleaning prohibited region, wherein the routine cleaning region is a region where entry of the cleaning device for cleaning is permitted, and the cleaning prohibited region is a region where entry of the cleaning device is prohibited under any circumstances, or where entry is prohibited when the cleaning device is mopping.

Obviously, existing technologies merely establish two absolute demarcations: "entry for cleaning permitted" and "entry for cleaning prohibited". However, setting a region where "entry for cleaning is prohibited" may block an optimal cleaning path of the cleaning device, necessitating detours that compromise cleaning efficiency; while some regions where "entry for cleaning is permitted" constitute jamming-prone regions where repeated movement in the regions for cleaning will lead to jamming of the cleaning device, equally diminishing cleaning efficiency.

### SUMMARY OF THE INVENTION

In view of this, the present disclosure provides a cleaning device control method, a cleaning device control apparatus, an electronic device and a computer readable storage medium, which solves the problem of low cleaning efficiency in related technologies.

In a first aspect, an embodiment of the present disclosure provides a cleaning device control method, including: determining a low-frequency passage region within a room to be cleaned, and acquiring cleaning task information; planning a passing path of the cleaning device inside the low-frequency passage region and planning a cleaning path of the cleaning device outside the low-frequency passage region based on the cleaning task information; and controlling the cleaning device to move along the passing path and move along the cleaning path.

The above-described method according to the embodiment of the present disclosure may also have additional technical features as follows.

In the above-described technical solution, optionally, the moving along the passing path includes: moving along the passing path without executing cleaning logic; and the moving along the cleaning path includes: moving along the cleaning path and executing cleaning logic.

In the above-described technical solution, optionally, the planning a passing path of the cleaning device inside the low-frequency passage region and planning a cleaning path of the cleaning device outside the low-frequency passage region based on the cleaning task information includes: planning the passing path inside the low-frequency passage region and respectively planning cleaning paths inside a plurality of different cleaning regions according to the cleaning task information, if the low-frequency passage region divides a region outside the low-frequency passage region into a plurality of different cleaning regions.

In any one of the above-described technical solutions, optionally, the determining a low-frequency passage region within a room to be cleaned includes: acquiring a user's region setting information, and determining the low-frequency passage region within the room to be cleaned according to the region setting information.

In any one of the above-described technical solutions, optionally, the determining a low-frequency passage region within a room to be cleaned includes: identifying a doorsill region within the room to be cleaned through an identifying apparatus of the cleaning device, and taking the doorsill region as the low-frequency passage region.

In any one of the above-described technical solutions, optionally, the identifying apparatus includes at least one of: a laser sensor, a visual sensor, and an infrared sensor.

In any one of the above-described technical solutions, optionally, the taking the doorsill region as the low-frequency passage region specifically includes: taking the doorsill region as the low-frequency passage region in response to the user's confirmation information for the doorsill region.

In any one of the above-described technical solutions, optionally, after the determining the low-frequency passage region within the room to be cleaned, the method further includes: adjusting the low-frequency passage region in response to the user's region reset information for the low-frequency passage region.

In any one of the above-described technical solutions, optionally, a length of the low-frequency passage region ranges from 0.4 m to 3 m, and a width of the low-frequency passage region ranges from 0.1 m to 0.2 m.

In any one of the above-described technical solutions, optionally, the method further includes: controlling the cleaning device not to execute an obstacle avoidance operation on an unidentifiable object when the cleaning device moves into the low-frequency passage region, if there is the unidentifiable object inside the low-frequency passage region, wherein the unidentifiable object is an object whose category cannot be identified by the cleaning device.

In any one of the above-described technical solutions, optionally, the method further includes: elevating a height of a target executing part of the cleaning device when the cleaning device moves into the low-frequency passage region.

In any one of the above-described technical solutions, optionally, the target executing part includes at least one of: a floor brush, a mopping-cloth support, and a dust collection cylinder.

In any one of the above-described technical solutions, optionally, the method further includes: increasing a detection trigger threshold of a detecting apparatus of the cleaning device when the cleaning device moves into a preset range in the vicinity of the low-frequency passage region.

In any one of the above-described technical solutions, optionally, the detecting apparatus includes at least one of: a carpet detection sensor, a collision sensor, and a cliff sensor.

In a second aspect, an embodiment of the present disclosure provides a cleaning device control apparatus, including: a region determining module, configured to determine a low-frequency passage region within a room to be cleaned; an information acquiring module, configured to acquire cleaning task information; a path planning module, configured to plan a passing path of the cleaning device inside the low-frequency passage region and planning a cleaning path of the cleaning device outside the low-frequency passage region based on the cleaning task information; and a control module, configured to control the cleaning device to move along the passing path and move along the cleaning path.

In a third aspect, an embodiment of the present disclosure provides an electronic device, including a processor and a memory; the memory having programs or instructions stored thereon; the programs or instructions may run on the processor; and the programs or instructions, when executed by the processor, implement the steps of the method according to the first aspect.

In a fourth aspect, an embodiment of the present disclosure provides a computer readable storage medium, having programs or instructions stored thereon, wherein the programs or instructions, when executed by a processor, implement the steps of the method according to the first aspect.

In a fifth aspect, an embodiment of the present disclosure provides a chip, including a processor and a communication interface; the communication interface is coupled with the processor; and the processor is configured to run programs or instructions to implement the method according to the first aspect.

In a sixth aspect, an embodiment of the present disclosure provides a computer program product, stored in a storage medium and executed by at least one processor to implement the method according to the first aspect.

In the embodiment of the present disclosure, the low-frequency passage region is set within the room to be cleaned. The low-frequency passage region is a region between the routine cleaning region and the cleaning prohibited region, and follows a necessary-passage-only principle. That is, this region permits passing only when necessary. It may be understood as a jamming-prone region, or a region with intentionally reduced cleaning frequency. Acquiring cleaning task information means acquiring a specific location within the room to be cleaned that requires cleaning by the cleaning device, and planning an optimal movement path of the cleaning device based on the cleaning task information. The movement path includes a passing path and a cleaning path; the passing path refers to a path permitting passing only without cleaning; and the cleaning path refers to a path permitting both passing and cleaning. Specifically, the passing path is planned inside the low-frequency passage region, and the cleaning path is planned outside the low-frequency passage region. Further, the cleaning device is controlled to move along the passing path and the cleaning path.

In the embodiment of the present disclosure, the necessary-passage-only principle is set for the low-frequency passage region . The passing path may be planned inside the low-frequency passage region, permitting the cleaning device to pass through the low-frequency passage region when necessary, which improves a coverage range of movement, thereby reducing detour probabilities of the cleaning device. No cleaning path is planned inside the low-frequency passage region, which avoids repeated movement in the region, thereby minimizing the occurrence of jamming of the cleaning device, and ultimately improving the cleaning efficiency and an autonomous cleaning completion rate of the cleaning device.

The above description is only a summary of the technical solutions of the present disclosure. To enable better understanding of the technical solutions of the present disclosure, the contents of the specification can be implemented. To make the above-described and other purposes, features and advantages of the present disclosure more obvious and understandable, specific implementation modes of the present disclosure are illustrated hereinafter.

### BRIEF DESCRIPTION OF THE DRAWINGS

The accompanying drawings described here are used to provide a further understanding of the present disclosure and form a part of the present disclosure. The schematic embodiments and descriptions of the present disclosure are used to explain the present disclosure, and do not constitute an improper limitation of the present disclosure. In the drawings:
Fig. 1 shows a schematic flow chart of a cleaning device control method according to an embodiment of the present disclosure;
Fig. 2 shows a schematic diagram of a movement path of the cleaning device in the related technologies;
Fig. 3 shows a schematic diagram of the movement path of the cleaning device according to an embodiment of the present disclosure;
Fig. 4 shows a schematic diagram of a low-frequency passage region according to an embodiment of the present disclosure;
Fig. 5 shows a structural block diagram of a cleaning device control apparatus according to an embodiment of the present disclosure; and
Fig. 6 shows a structural block diagram of an electronic device according to an embodiment of the present disclosure.

### DETAILED DESCRIPTION

The technical solutions of the embodiments of the present disclosure will be described in a clearly and fully understandable way in connection with the accompanying drawings in the embodiments of the present disclosure. It is obvious that the described embodiments are just a part but not all of the embodiments of the present disclosure. Based on the embodiments described herein, those ordinarily skilled in the art may obtain other embodiment(s), which should be within the scope of the present utility model.

The terms "first", "second" and the like in the description and claims of the present disclosure are used to distinguish similar objects, and are not necessarily used to describe a specific order or sequence. It should be understood that, the data so used may be interchanged under appropriate circumstances such that the embodiments of the present disclosure described herein may be practiced in sequences other than those illustrated or described herein. The objects distinguished by "first", "second", and the like are usually of one class, and do not limit the number of objects, for example, the first object may be one or more. In addition, in the description and claims, "and/or" indicates at least one of the connected objects, and the character "/" usually signifies an "or" relationship between the associated preceding and following terms

Hereinafter, the cleaning device control method, the cleaning device control apparatus, the electronic device and the computer readable storage medium provided by the embodiments of the present disclosure will be described in detail through specific embodiments and application scenarios thereof in combination with the drawings.

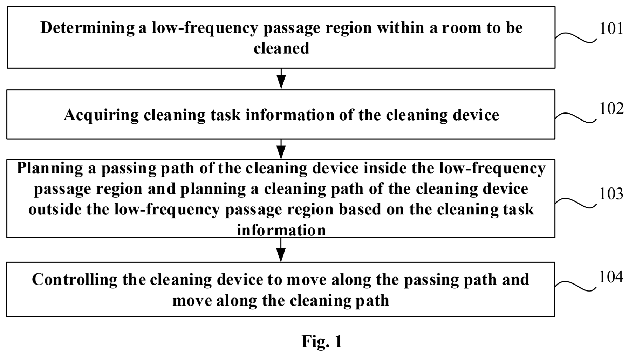

An embodiment of the present disclosure provides a cleaning device control method, and as shown in Fig. 1, the method includes the following steps.

Step 101: a low-frequency passage region within a room to be cleaned is determined.

In this step, one or more low-frequency passage regions are set within the room to be cleaned. The low-frequency passage region is a region between the routine cleaning region and the cleaning prohibited region and follows a necessary-passage-only principle. That is, this region permits passing only when necessary, and may be understood as a jamming-prone region, or a region with intentionally reduced cleaning frequency, such as a room doorsill, a carpet region at a toilet entrance, etc.

Step 102: cleaning task information of the cleaning device is acquired.

In this step, acquiring the cleaning task information means acquiring a specific location within the room to be cleaned that requires cleaning by the cleaning device; and the cleaning task information may be a cleaning task set by the user on the cleaning device or a terminal device, or downloaded from the network.

Step 103: a passing path of the cleaning device is planned inside the low-frequency passage region and a cleaning path of the cleaning device is planned outside the low-frequency passage region based on the cleaning task information.

Step 104: the cleaning device is controlled to move along the passing path and move along the cleaning path.

In this step, an optimal movement path of the cleaning device is planned based on the cleaning task information. The movement path includes a passing path and a cleaning path. That is, the movement path of the cleaning device is divided into the passing path and the cleaning path. The passing path refers to a path permitting passing only without cleaning; and the cleaning path refers to a path permitting both passing and cleaning. Specifically, the passing path is planned inside the low-frequency passage region, and the cleaning path is planned outside the low-frequency passage region. Further, the cleaning device is controlled to move along the passing path and the cleaning path.

It should be noted that the cleaning device is a mobile device, including a sweeping robot, a mopping robot, a mopping-sweeping all-in-one robot, a vacuum cleaner, or other device.

The cleaning device control method may be applied to the cleaning device, or applied to the user's terminal device. When applied to the user's terminal device, the terminal device determines the low-frequency passage region within the room to be cleaned, plans the passing path inside the low-frequency passage region, plans the cleaning path outside the low-frequency passage region, and sends a control signal including the passing path and the cleaning path to the cleaning device. The cleaning device moves within the room to be cleaned based on the control signal.

In the embodiment of the present disclosure, the necessary-passage-only principle is set for the low-frequency passage region. The passing path may be planned inside the low-frequency passage region, permitting the cleaning device to pass through the low-frequency passage region when necessary, which improves a coverage range of movement, thereby reducing detour probabilities of the cleaning device. No cleaning path is planned inside the low-frequency passage region, which avoids repeated movement in the region, thereby minimizing the occurrence of jamming of the cleaning device, and ultimately improving the cleaning efficiency and an autonomous cleaning completion rate of the cleaning device.

In one embodiment, the cleaning device moving along the passing path includes: moving along the passing path without executing cleaning logic; and the cleaning device moving along the cleaning path includes: moving along the cleaning path and executing the cleaning logic. In this step, when the cleaning device is controlled to move according to the movement path, the cleaning device is permitted to pass through the low-frequency passage region according to the passing path, but the cleaning device is controlled not to execute the cleaning logic inside the low-frequency passage region, and the cleaning device is controlled to execute the cleaning logic only when moving according to the cleaning path. The cleaning logic includes logic such as walking along a wall, walking in a zigzag pattern, etc.

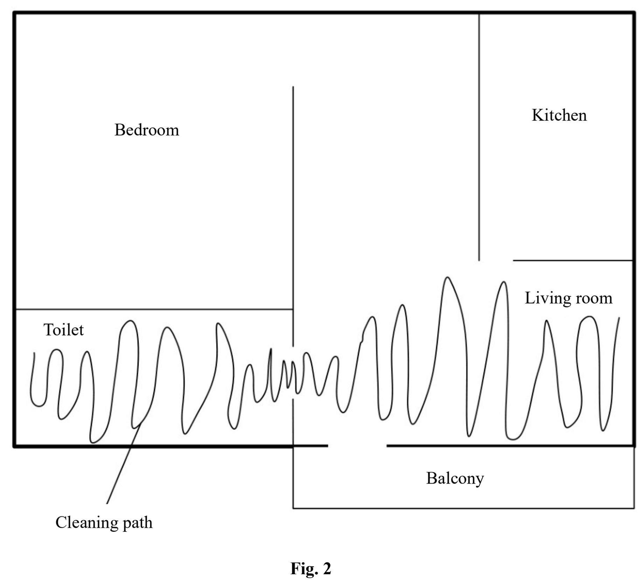

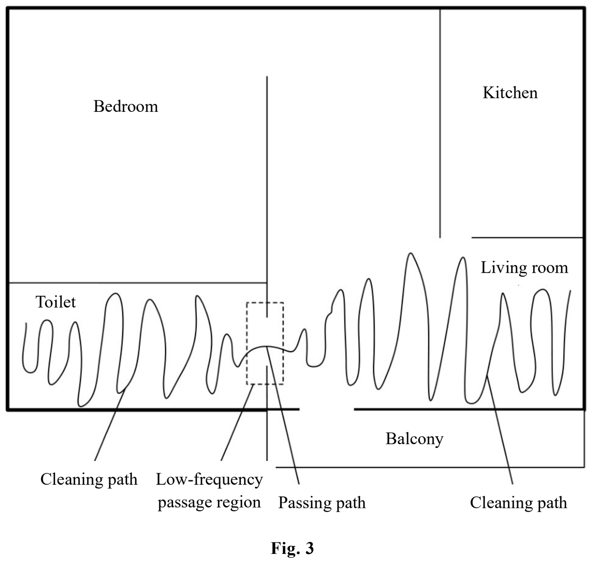

That is to say, with respect to the set low-frequency passage region, when the cleaning device is moving, no cleaning logic is carried out inside the low-frequency passage region; but if there are tasks (e.g., tasks such as crossing regions, recharging, backwashing, etc.) that require passing through the low-frequency passage region, the cleaning device may normally pass through the low-frequency passage region without cleaning the same. Exemplarily, if a doorsill region between the toilet and the living room is not set as a low-frequency passage region, then the cleaning path of the cleaning device is as shown in Fig. 2, and the cleaning device will repeatedly clean the doorsill region, causing jamming. However, after the doorsill region is set as a low-frequency passage region, as shown in Fig. 3, the cleaning device only passes through the low-frequency passage region according to the passing path without repeatedly cleaning the same, but cleans a region outside the low-frequency passage region according to the cleaning path.

The embodiment of the present disclosure allows the cleaning device to pass through the low-frequency passage region when necessary, thereby reducing detour probabilities of the cleaning device. No cleaning path is planned inside the low-frequency passage region. That is, the low-frequency passage region permits passage only without cleaning, which avoids repeated movement in the region, thereby minimizing jamming of the cleaning device.

In one embodiment of the present disclosure, the step 103 of planning a passing path of the cleaning device inside the low-frequency passage region and planning a cleaning path of the cleaning device outside the low-frequency passage region, based on the cleaning task information specifically includes: if the low-frequency passage region divides a region outside the low-frequency passage region into a plurality of different cleaning regions, planning the passing path inside the low-frequency passage region and respectively planning cleaning paths inside the plurality of different cleaning regions according to the cleaning task information.

In this embodiment, the cleaning region within the room to be cleaned that needs to be cleaned by the cleaning device is determined according to the cleaning task information. If the low-frequency passage region divides the region outside the low-frequency passage region into a plurality of different cleaning regions, it indicates that the cleaning device needs to cross regions for cleaning, and must pass through the low-frequency passage region. In such a case, the passing path is planned inside the low-frequency passage region, and cleaning paths are respectively planned inside the plurality of different cleaning regions, so as to implement cleaning inside the cleaning region, while only passing through the low-frequency passage region without cleaning.

The above-described method, on one hand, reduces detour probabilities of the cleaning device, on the other hand, avoids repeated movement in the region, and improves the cleaning efficiency of the cleaning device.

It should be noted that with respect to the planning the passing path inside the low-frequency passage region, the number of times the cleaning device passes through the low-frequency passage region should be minimized. That is, passage frequency of the cleaning device through the region should be made as low as possible. For example, the cleaning device may be controlled firstly to complete the cleaning task on one side of the low-frequency passage region, and then to pass through the low-frequency passage region to complete the cleaning task on the other side, so that the cleaning device only passes through the low-frequency passage region for one time. In the embodiment of the present disclosure, the number of times the cleaning device passes through the low-frequency passage region is reduced, which avoids repeated passing of the low-frequency passage region by the cleaning device, thereby lowering risks of jamming and slipping of the cleaning device.

With respect to the determining of the low-frequency passage region inside the room to be cleaned, the present disclosure has two implementable modes. The first implementable mode includes acquiring the user's region setting information, and determining the low-frequency passage region within the room to be cleaned according to the region setting information.

In this embodiment, the user may set the region manually; and the cleaning device determines the low-frequency passage region within the room to be cleaned according to the user's region setting information.

Exemplarily, the cleaning device may be provided with a touchscreen; and the touchscreen displays a room map of the room to be cleaned for the user to understand room layout. The user may add a low-frequency passage region by either entering a region name or selecting a region with a bounding box on the room map through the touchscreen.

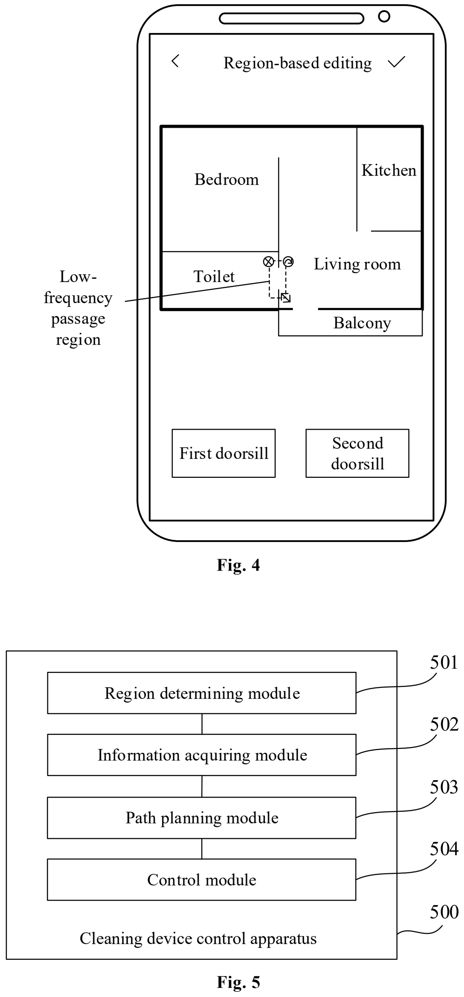

Or, the user may add a low-frequency passage region in an App of the terminal device; and as shown in Fig. 4, the user adds a low-frequency passage region by selecting a low-frequency passage region in the toilet door with a bounding box. In addition, the user may perform operations of resetting, zooming and deleting on the low-frequency passage region selected with a bounding box. Both the cleaning device and the terminal device have a room map stored therein. The terminal device sends the information of the low-frequency passage region added by the user to the cleaning device, and the cleaning device may determine the low-frequency passage region according to the information.

In the embodiment of the present disclosure, the low-frequency passage region may be user-selected as needed to accommodate cleaning requirements of the user.

The second implementable mode of determining the low-frequency passage region includes identifying the doorsill region within the room to be cleaned through an identifying apparatus of the cleaning device, and taking the doorsill region as the low-frequency passage region. The identifying apparatus includes at least one of: a laser docking sensor (laser docking sensor, LDS), a visual sensor and an infrared sensor.

In this embodiment, the cleaning device may find the doorsill region by means of laser, vision, infrared, etc. based on its own identifying apparatus. Since the doorsill region is a jamming-prone region, it is set as a low-frequency passage region following a necessary-passage-only principle.

Furthermore, in addition to being identified through a hardware apparatus of the cleaning device itself, the doorsill region may also be identified through a hardware apparatus installed by other household appliance (e.g., a household mobile artificial intelligence (AI) device) in communicative connection with the cleaning device. Information of the identified doorsill region is sent to the cleaning device; and after receiving the information of the doorsill region, the cleaning device sets the doorsill region as a low-frequency passage region.

In addition to the mode of hardware apparatus identification, software identification may also be carried out. That is, the room map is stored in the cleaning device, and the doorsill region is determined through the room map. In some embodiments, the doorsill region may also be determined by other household appliance or terminal device in communicative connection with the cleaning device through the room map. The information of the determined doorsill region is sent to the cleaning device; and after receiving the information of the doorsill region, the cleaning device sets the doorsill region as a low-frequency passage region.

In the above-described mode, the low-frequency passage region may be automatically identified and set without being manually set by the user, which improves an automation degree.

In one embodiment of the present disclosure, the taking the doorsill region as the low-frequency passage region specifically includes: taking the doorsill region as the low-frequency passage region in response to the user's confirmation information for the doorsill region.

In this embodiment, after the doorsill region is identified, the user will reconfirm in order to ensure accuracy; and after the user's confirmation information is received, the doorsill region is set as the low-frequency passage region.

It should be noted that the touchscreen of the cleaning device may display the identified doorsill region, allowing the user to confirm or adjust the same on the touchscreen, or the cleaning device sends the identified doorsill region to the user's terminal device, allowing the user to confirm or adjust the same on his/her terminal device.

The embodiment of the present disclosure improves accuracy of setting the low-frequency passage region by allowing the user to reconfirm the doorsill region identified by the cleaning device, thereby improving cleaning efficiency of the cleaning device.

As an implementable mode of the present disclosure, after the determining a low-frequency passage region within a room to be cleaned, the method further includes: adjusting the low-frequency passage region in response to the user's region reset information for the low-frequency passage region.

That is, after the low-frequency passage region is set, the low-frequency passage region may further be adjusted, and the adjust operation includes deleting, modifying, etc. For example, after the low-frequency passage region is set, the cleaning device displays the room map of the room to be cleaned on the touchscreen having a display function, and the room map includes the set low-frequency passage region. If the user is not satisfied with the setting of the low-frequency passage region, he/she may adjust the same. The adjusting operation of the low-frequency passage region is similar to the setting operation of the low-frequency passage region, and no details will be repeated here.

The set low-frequency passage region may be adjusted through the above-described mode, so that the low-frequency passage region meets user requirements, thereby enhancing cleaning effects of the cleaning device.

In one embodiment of the present disclosure, a length of the low-frequency passage region ranges from 0.4 m to 3 m, and a width of the low-frequency passage region ranges from 0.1 m to 0.2 m.

In this embodiment, the length and the width of the set low-frequency passage region have certain limitations. That is, the low-frequency passage region is not set as a larger region, and the length thereof is limited to a range of 0.4 m to 3 m, and the width thereof is limited to a range of 0.1 m to 0.2 m.

In the embodiment of the present disclosure, the low-frequency passage region has certain length and width limitations, to avoid the user setting a non-compliant region that affects normal cleaning operations of the cleaning device.

In one embodiment of the present disclosure, the method further includes: if there is an unidentifiable object inside the low-frequency passage region, controlling the cleaning device not to execute an obstacle avoidance operation on the unidentifiable object when the cleaning device moves into the low-frequency passage region, wherein the unidentifiable object is an object whose category cannot be identified by the cleaning device.

In this embodiment, the cleaning device will perform obstacle avoidance detection during movement. Obstacle avoidance detection refers to firstly identifying a category of an object within the region, and then determining whether to perform an obstacle avoidance operation (i.e., edgefollowing bypassing of the object, or decelerating with light contact) on the object according to the category of the object.

When the cleaning device identifies objects inside the low-frequency passage region, if there is an object inside the low-frequency passage region whose category cannot be identified by the cleaning device (e.g., a doorsill), obstacle avoidance omission is executed on the object whose category cannot be identified; and obstacle avoidance continues for objects whose category can be identified.

In the embodiment of the present disclosure, if there is an object inside the low-frequency passage region whose category cannot be identified, the object is ignored and no obstacle avoidance operation will be performed thereon to reduce possibilities of mistaking the doorsill as an obstacle, so that the cleaning device may smoothly pass through the doorsill region when necessary, thereby improving cleaning efficiency.

In one embodiment of the present disclosure, the method further includes: elevating a height of a target executing part of the cleaning device when the cleaning device moves into the low-frequency passage region.

The target executing part includes at least one of: a floor brush, a mopping-cloth support, and a dust collection cylinder.

In this embodiment, because the low-frequency passage region is usually a jamming-prone region (e.g., a room doorsill), or a region where frequent cleaning by the cleaning device is undesirable (e.g., the carpet region at the toilet entrance), the target executing part is controlled to elevate when the cleaning device passes through the low-frequency passage region, so that there is a certain height difference between the target executing part and the low-frequency passage region.

The above-described mode, on one hand, may avoid jamming of the cleaning device, on the other hand, may reduce noise and prevent dust or water stains from falling on the doorsill or carpet.

In one embodiment of the present disclosure, the method further includes: increasing a detection trigger threshold of a detecting apparatus of the cleaning device when the cleaning device moves into a preset range in the vicinity of the low-frequency passage region. The detecting apparatus includes at least one of: a carpet detection sensor, a collision sensor, and a cliff sensor.

In this embodiment, since the cleaning device may experience jolting or tilting inside the low-frequency passage region or in the vicinity thereof, detection trigger thresholds of the detecting apparatuses such as the carpet detection sensor, the collision sensors, the cliff sensor are raised to avoid false trigger of these detecting apparatuses, thereby reducing possibilities of trigger.

The carpet detection sensor is configured to detect whether the cleaning device is located on a carpet, and may specifically be an optical flow image sensor or a pressure sensor. The collision sensor is configured to sense collision suffered by the cleaning device and an approximate position of the collision by using a photoelectric switch. The cliff sensor is configured to sense a significant height difference to prevent the cleaning device from falling from a high place.

For example, with respect to the cliff sensor, in other region outside the low-frequency passage region, a detection signal is acquired through the cliff sensor. If a numerical value of the detection signal is determined to be greater than a first threshold, it is determined that there is a significant height difference in front of the cleaning device. In the low-frequency passage region, the numerical value of the first threshold is increased. When the numerical value of the detection signal becomes greater, it is determined that there is a significant height difference in front of the cleaning device.

In the embodiment of the present disclosure, a trigger threshold of the relevant detecting apparatus is raised for the low-frequency passage region and a certain range in the vicinity thereof, to reduce false trigger probabilities of the detecting apparatus, and improve cleaning accuracy.

As specific implementation of the above-described cleaning device control method, an embodiment of the present disclosure provides a cleaning device control apparatus. As shown in Fig. 5, the cleaning device control apparatus 500 includes: a region determining module 501, an information acquiring module 502, a path planning module 503 and a control module 504.

The region determining module 501 is configured to determine a low-frequency passage region within a room to be cleaned; the information acquiring module 502 is configured to acquire cleaning task information; the path planning module 503 is configured to plan a passing path of the cleaning device inside the low-frequency passage region and planning a cleaning path of the cleaning device outside the low-frequency passage region based on the cleaning task information; and the control module 504 is configured to control the cleaning device to move along the passing path and move along the cleaning path.

In this embodiment, the low-frequency passage region is set within the room to be cleaned. The low-frequency passage region is a region between the routine cleaning region and the cleaning prohibited region. The low-frequency passage region follows a necessary-passage-only principle, and permits passing only when necessary. It may be understood as a jamming-prone region, or a region with intentionally reduced cleaning frequency. Acquiring the cleaning task information means acquiring a specific location within the room to be cleaned that requires cleaning by the cleaning device, and planning an optimal movement path of the cleaning device based on the cleaning task information. The movement path includes a passing path and a cleaning path. The passing path refers to a path permitting passing only without cleaning; and the cleaning path refers to a path permitting both passing and cleaning. Specifically, the passing path is planned inside the low-frequency passage region, and the cleaning path is planned outside the low-frequency passage region. Further, the cleaning device is controlled to move along the passing path and the cleaning path.

In the embodiment of the present disclosure, the necessary-passage-only principle is set for the low-frequency passage region. The passing path may be planned inside the low-frequency passage region, permitting the cleaning device to pass through the low-frequency passage region when necessary, which improves a coverage range of movement, thereby reducing detour probabilities of the cleaning device. No cleaning path is planned inside the low-frequency passage region, which avoids repeated movement in the region, thereby minimizing jamming of the cleaning device, and ultimately improving the cleaning efficiency and an autonomous cleaning completion rate of the cleaning device.

Further, the moving along the passing path includes: moving along the passing path without executing cleaning logic; and the moving along the cleaning path includes: moving along the cleaning path and executing the cleaning logic.

Further, the path planning module 503 is specifically configured to: plan the passing path inside the low-frequency passage region and respectively plan cleaning paths inside a plurality of different cleaning regions according to the cleaning task information, if the low-frequency passage region divides a region outside the low-frequency passage region into a plurality of different cleaning regions.

Further, the region determining module 501 is specifically configured to: acquire a user's region setting information, and determine the low-frequency passage region within the room to be cleaned according to the region setting information.

Further, the region determining module 501 is specifically configured to: identify a doorsill region within the room to be cleaned through an identifying apparatus of the cleaning device, and take the doorsill region as the low-frequency passage region.

Further, the identifying apparatus includes at least one of: a laser sensor, a visual sensor, and an infrared sensor.

Further, the region determining module 501 is specifically configured to: take the doorsill region as the low-frequency passage region in response to the user's confirmation information for the doorsill region.

Further, the region determining module 501 is further configured to: adjust the low-frequency passage region in response to the user's region reset information for the low-frequency passage region.

Further, a length of the low-frequency passage region ranges from 0.4 m to 3 m, and a width of the low-frequency passage region ranges from 0.1 m to 0.2 m.

Further, the control module 504 is further configured to: if there is an unidentifiable object inside the low-frequency passage region, control the cleaning device not to execute an obstacle avoidance operation on the unidentifiable object when the cleaning device moves into the low-frequency passage region, wherein the unidentifiable object is an object whose category cannot be identified by the cleaning device.

Further, the control module 504 is further configured to: elevate a height of a target executing part of the cleaning device when the cleaning device moves into the low-frequency passage region.

Further, the target executing part includes at least one of: a floor brush, a mopping-cloth support, and a dust collection cylinder.

Further, the control module 504 is further configured to: increase a detection trigger threshold of a detecting apparatus of the cleaning device when the cleaning device moves into a preset range in the vicinity of the low-frequency passage region.

Further, the detecting apparatus includes at least one of: a carpet detection sensor, a collision sensor, and a cliff sensor.

The cleaning device control apparatus according to the embodiment of the present disclosure may be an electronic device, or a component in the electronic device, for example, an integrated circuit or a chip.

The cleaning device control apparatus 500 provided by the embodiment of the present disclosure may implement respective procedures implemented by the cleaning device control method embodiment of Fig. 1; and no details will be repeated here.

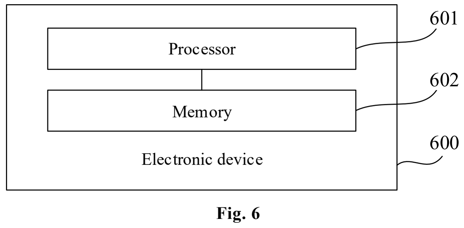

An embodiment of the present disclosure further provides an electronic device, as shown in Fig. 6, the electronic device 600 includes a processor 601 and a memory 602; the memory 602 has programs or instructions stored thereon; the programs or instructions may run on the processor 601; and the programs or instructions, when executed by the processor 601, implement the respective steps of above-described cleaning device control method embodiment, and may achieve the same technical effect; and no details will be repeated here.

Exemplarily, the electronic device may be a mobile phone, a tablet personal computer, a laptop, a palmtop computer, a vehicle-mounted electronic device, a mobile internet device (mobile internet device, MID), a robot, a wearable device, an ultra-mobile personal computer (ultra-mobile personal computer, UMPC), a netbook or a personal digital assistant (personal digital assistant, PDA), etc., or may also be a server, a network attached storage (network attached storage, NAS), a personal computer (personal computer, PC), etc. which will not be specifically limited in the embodiments of the present disclosure; and the above-described robot may be the cleaning device.

The memory 602 may be configured to store software programs and various data. The memory 602 may mainly include a first storage region for storing programs or instructions and a second storage region for storing data, wherein the first storage region may store an operating system, application programs or instructions required for at least one function (e.g., a sound playing function, an image playing function, etc.), or the like. In addition, memory 602 may include a volatile memory or a non-volatile memory, or the memory 602 may include both a volatile memory and a non-volatile memory. The non-volatile memory may be a read-only memory (read-only memory, ROM), a programmable ROM (programmable ROM, PROM), an erasable PROM (erasable PROM, EPROM), an electrically EPROM (electrically EPROM, EEPROM) or a flash memory. The volatile memory may be a random access memory (random access memory, RAM), a static RAM (static RAM, SRAM), a dynamic RAM (dynamic RAM, DRAM), a synchronous DRAM (synchronous DRAM, SDRAM), a double data rate SDRAM (double data rate SDRAM, DDRSDRAM), an enhanced SDRAM (enhanced SDRAM, ESDRAM), a synch link DRAM (synch link DRAM, SLDRAM), and a direct rambus RAM (direct rambus RAM, DRRAM). The memory 602 according to the embodiment of the present disclosure includes, but is not limited to, these and any other suitable type of memory.

The processor 601 may include one or more processing units; optionally, the processor 601 integrates an application processor and a modem processor. The application processor mainly deals with operations involving the operating system, a user interface and application programs, etc.. The modem processor mainly deals with wireless communication signals, for example, a baseband processor. It may be understood that the above-described modem processor may not be integrated into the processor 601.

An embodiment of the present disclosure further provides a computer readable storage medium, having programs or instructions stored thereon. The programs or instructions, when executed by the processor, implement the respective procedures of the above-described cleaning device control method embodiment, and may achieve the same technical effect; and no details will be repeated here.

An embodiment of the present disclosure further provides a chip, including a processor and a communication interface. The communication interface is coupled with the processor. The processor is configured to run programs or instructions to implement the respective procedures of the above-described cleaning device control method embodiment, and may achieve the same technical effect; and no details will be repeated here.

It should be understood that the chip mentioned in the embodiments of the present disclosure may also be referred to as a system-level chip, a system chip, a chip system, or a system on chip, etc.

An embodiment of the present disclosure further provides a computer program product, stored on a storage medium. The program product is executed by at least one processor to implement the respective procedures of the above-described cleaning device control method embodiment, and may achieve the same technical effect; and no details will be repeated here.

It should be noted that, the terms "include", "comprise", or any other variants thereof here are intended to cover a non-exclusive inclusion, so that a process, a method, a product or an apparatus that includes a list of elements not only includes those elements but also includes other elements that are not expressly listed, or further includes elements inherent to such process, method, product or apparatus. Without more constraints, the elements limited by the statement "including one..." does not exclude that there is another same or identical element in the process, method, product, or apparatus that includes the element. In addition, it should be pointed out that the scope of the method and the apparatus according to the embodiments of the present disclosure is not limited to executing functions in the order shown or discussed, but may also include executing functions in a basically simultaneous manner or in a reverse order according to the functions involved. For example, the described method may be executed in a different order from the described order, and various steps may also be added, omitted, or combined. In addition, features described with reference to some examples may be combined in other examples.

The embodiments of the present disclosure are described above in combination with the accompanying drawings, but the present disclosure is not limited to the above-described specific embodiments. The above-described specific embodiments are only schematic, but not restrictive. Under inspiration of the present disclosure, those ordinarily skilled in the art may also make many forms, all of which fall within the protection of the present disclosure, without departing from the scope of the purpose and claims of the present disclosure.

## Claims

1. A cleaning device control method, comprising:
determining a low-frequency passage region within a room to be cleaned, and acquiring cleaning task information of the cleaning device;
planning a passing path of the cleaning device inside the low-frequency passage region and planning a cleaning path of the cleaning device outside the low-frequency passage region based on the cleaning task information; and
controlling the cleaning device to move along the passing path and move along the cleaning path.

2. The method according to claim 1, wherein the moving along the passing path comprises: moving along the passing path without executing cleaning logic; and the moving along the cleaning path comprises: moving along the cleaning path and executing the cleaning logic.

3. The method according to claim 1, wherein the planning a passing path of the cleaning device inside the low-frequency passage region and planning a cleaning path of the cleaning device outside the low-frequency passage region based on the cleaning task information comprises:
planning the passing path inside the low-frequency passage region and respectively planning cleaning paths inside a plurality of different cleaning regions according to the cleaning task information, if the low-frequency passage region divides a region outside the low-frequency passage region into a plurality of different cleaning regions.

4. The method according to claim 1, wherein the determining a low-frequency passage region within a room to be cleaned comprises:
acquiring a user's region setting information, and determining the low-frequency passage region within the room to be cleaned according to the region setting information.

5. The method according to claim 1, wherein the determining a low-frequency passage region within a room to be cleaned comprises:
identifying a doorsill region within the room to be cleaned through an identifying apparatus of the cleaning device, and taking the doorsill region as a low-frequency passage region.

6. The method according to claim 5, wherein
the identifying apparatus comprises at least one of: a laser sensor, a visual sensor, and an infrared sensor.

7. The method according to claim 5, wherein the taking the doorsill region as a low-frequency passage region specifically comprises:
taking the doorsill region as the low-frequency passage region in response to user's confirmation information for the doorsill region.

8. The method according to claim 1, wherein after the determining a low-frequency passage region within a room to be cleaned, the method further comprises:
adjusting the low-frequency passage region in response to user's region reset information for the low-frequency passage region.

9. The method according to claim 1, wherein
a length of the low-frequency passage region ranges from 0.4 m to 3 m, and a width of the low-frequency passage region ranges from 0.1 m to 0.2 m.

10. The method according to any one of claims 1 to 9, further comprising:
if there is an unidentifiable object inside the low-frequency passage region, controlling the cleaning device not to execute an obstacle avoidance operation on the unidentifiable object when the cleaning device moves into the low-frequency passage region, wherein the unidentifiable object is an object whose category cannot be identified by the cleaning device.

11. The method according to any one of claims 1 to 9, further comprising:
elevating a height of a target executing part of the cleaning device when the cleaning device moves into the low-frequency passage region.

12. The method according to claim 11, wherein
the target executing part comprises at least one of: a floor brush, a mopping-cloth support, and a dust collection cylinder.

13. The method according to any one of claims 1 to 9, further comprising:
increasing a detection trigger threshold of a detecting apparatus of the cleaning device when the cleaning device moves into a preset range in the vicinity of the low-frequency passage region.

14. The method according to claim 13, wherein
the detecting apparatus comprises at least one of: a carpet detection sensor, a collision sensor, and a cliff sensor.

15. A cleaning device control apparatus, comprising:
a region determining module, configured to determine a low-frequency passage region within a room to be cleaned;
an information acquiring module, configured to acquire cleaning task information of the cleaning device;
a path planning module, configured to plan a passing path of the cleaning device inside the low-frequency passage region and planning a cleaning path of the cleaning device outside the low-frequency passage region based on the cleaning task information; and
a control module, configured to control the cleaning device to move along the passing path and move along the cleaning path.

16. An electronic device, comprising a processor and a memory; wherein the memory has programs or instructions stored thereon, the programs or instructions run on the processor; and the programs or instructions, when executed by the processor, implement the steps of the cleaning device control method according to any one of claims 1 to 14.

17. A readable storage medium, having programs or instructions stored thereon, wherein the programs or instructions, when executed by a processor, implement the steps of the cleaning device control method according to any one of claims 1 to 14.
